# EUROPÄISCHE PATENTSCHRIFT

(11) **EP 0 789 648 B1**
(45) Veröffentlichungstag und Bekanntmachung des Hinweises auf die Patenterteilung: **29.04.1998**
(21) Anmeldenummer: 95933228.9
(22) Anmeldetag: 13.10.1995
(51) Int. Cl.: B29C 45/17

(54) **SPRITZGIESSMASCHINE**
INJECTION-MOULDING MACHINE
PRESSE D'INJECTION

(30) Priorität: 14.10.1994 AT 1950/94
(43) Veröffentlichungstag der Anmeldung: 20.08.1997
(60) Teilanmeldung: 97121094.3
(73) Patentinhaber: ENGEL MASCHINENBAU GESELLSCHAFT MBH, A-4311 Schwertberg (AT)
(72) Erfinder: NADERHIRN, Helmut, A-4320 Perg (AT)
(74) Vertreter: Torggler, Paul Norbert
(86) Internationale Anmeldenummer: AT9500201
(87) Internationale Veröffentlichungsnummer: WO9611785

(56) Entgegenhaltungen:
- WO-A-95/04643
- DE-A- 4 320 366
- DE-U- 9 402 825

## Beschreibung

Die Erfindung bezieht sich auf eine Spritzgießmaschine mit einem im wesentlichen C-förmigen Maschinenrahmen, an dessen einem Schenkel eine ortsfeste Formaufspannplatte und an dessen anderem Schenkel ein Schließmechanismus zum Antrieb einer bewegbaren Formaufspannplatte gelagert sind, wobei sich die nicht durch Holme verbundenen freien Enden der Schenkel des Maschinenrahmens unter dem Einfluß der während des Schließvorganges auftretenden Schließkraft verformen.

Eine derartige Spritzgießmaschine ist beispielsweise aus der DE-U1-92 12 480 bekannt. Aufgabe der Erfindung ist es, die Konstruktion zu vereinfachen und trotzdem eine gute Führung der Formaufspannplatten und eine absolute Parallelität der beiden Formhälften auch bei sehr hohen Formauftreibkräften zu erzielen.

Die Aufgabe wird gemäß Anspruch 1 und Anspruch 14 gelöst.

Mit einer solchen Konstruktion kann man die bisher bei holmlosen Spritzgießmaschinen vorgesehenen Achszapfen vermeiden. Wenn sich bei einer erfindungsgemäßen Spritzgießmaschine unter dem Einfluß der Schließkraft die beiden Schenkel des Maschinenrahmens um gedachte untere Drehachsen nach außen verschwenken, verschwenken sich die ortsfeste Formaufspannplatte und/oder der Schließmechanismus um gedachte obere Schwenkachsen gegenseitig.

Die Erfindung kann durch verschiedene Konstruktionen verwirklicht werden. Wesentlich ist dabei nur, daß die durch die Schließkraft bewirkte Verformung des Verbindungsbereiches von ortsfester Formaufspannplatte bzw. Schließmechanismus einerseits und Maschinenrahmen andererseits wenigstens annähernd die Aufweitung des oben offenen Maschinenrahmens kompensiert.

Vorzugsweise bestehen die Halteteile ebenso wie der Maschinenrahmen aus Stahl. Die Halteteile müssen aber nicht einstückig mit dem Maschinenrahmen sein, sondern können als gesonderte Bauteile ausgeführt werden. Dadurch eröffnet sich die Möglichkeit, Halteteile und Maschinenrahmen aus unterschiedlichem Material zu fertigen und insbesondere die Elastizität der Halteteile größer als die des Maschinenrahmens zu machen.

Nachfolgend werden verschiedene Ausführungsbeispiele der Erfindung anhand der Figuren der beiliegenden Zeichnungen eingehend beschrieben.

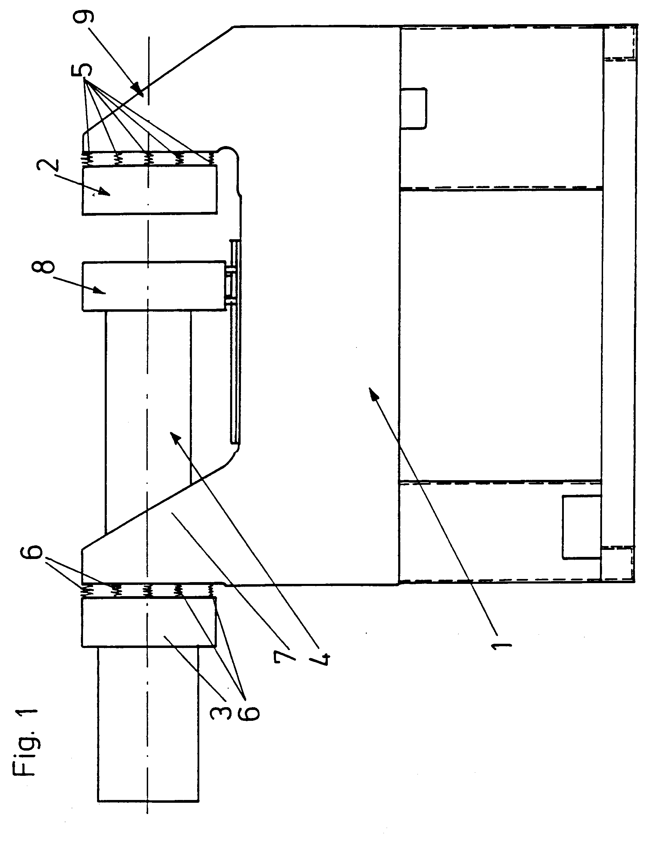

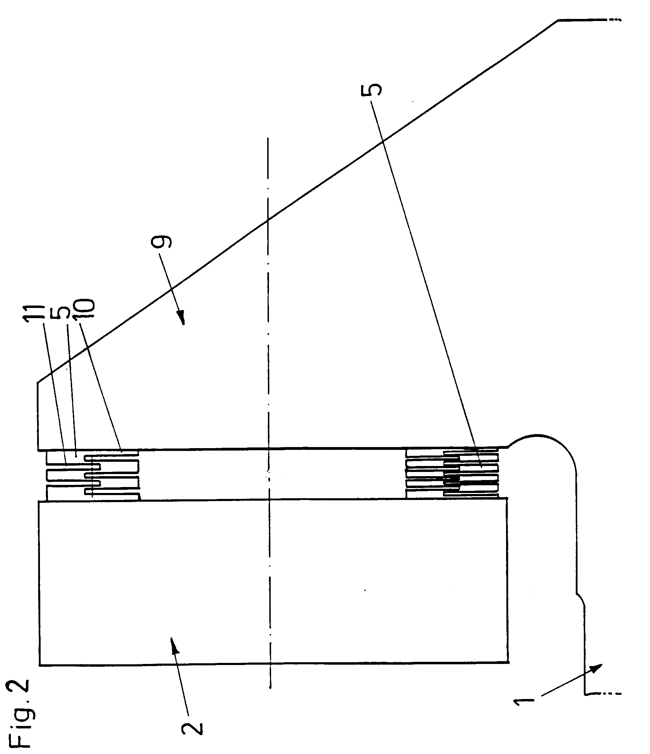

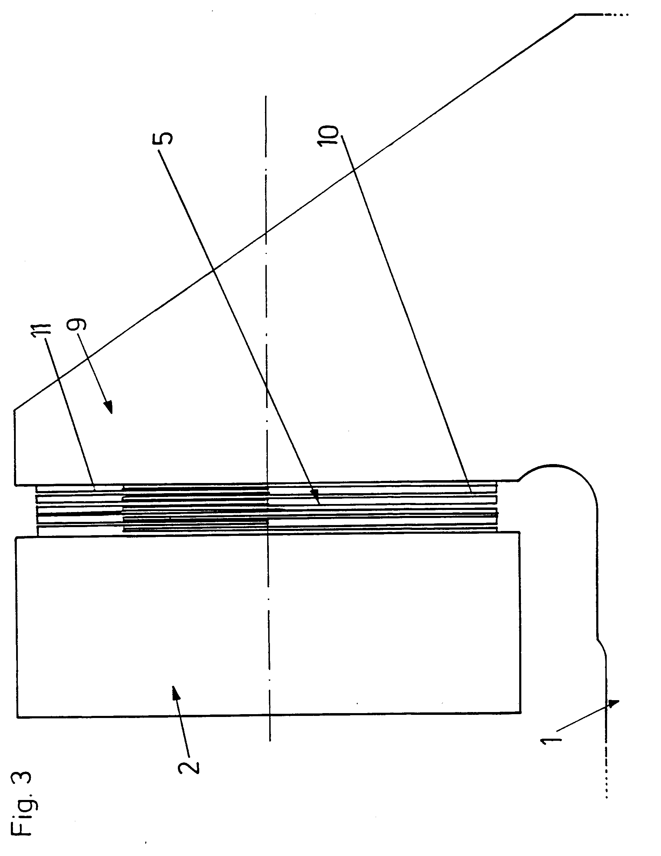

Die Fig. 1 zeigt eine schematisch gehaltene Seitenansicht einer erfindungsgemäßen Spritzgießmaschine und die Fig. 2 und 3 zeigen jeweils schematisch Seitenansichten der ortsfesten Formaufspannplatte und des dazugehörigen Teiles des Maschinenrahmens.

Der wesentliche Teil der Spritzgießmaschine ist der Maschinenrahmen 1, der über einen Rahmenschenkel 9 die ortsfeste Formaufspannplatte 2 und über einen Rahmenschenkel 7 einen Flansch 3 des Schließmechanismus 4 trägt.

Im gezeichneten Ausführungsbeispiel handelt es sich beim Schließmechanismus um eine hydraulische Kolben-Zylindereinheit. Es könnte jedoch auch ein elektromechanischer Schließmechanismus, beispielsweise auch ein Kniehebelmechanismus gelagert sein. Über den Schließmechanismus 4 wird die bewegbare Formaufspannplatte 8 verfahren.

Im Ausführungsbeispiel nach der Fig. 1 sind sowohl die ortsfeste Formaufspannplatte 2 als auch der Schließmechanismus 4 mittels mehrerer gesonderter Halteteile 5, 6 am Maschinenrahmen 1 gelagert. Im gezeigten Ausführungsbeispiel werden die Halteteile 5 zwischen der ortsfesten Formaufspannplatte 2 und dem Maschinenrahmen auf Druck und die Halteteile 6 zwischen der Antriebsplatte 3 und dem Maschinenrahmen 1 auf Zug belastet. Es wäre jedoch auch möglich, den Flansch 3 des Schließmechanismus 4 an der Innenseite des Rahmenschenkels 7 zu lagern, d. h. an der den Formaufspannplatten 2, 8 zugewendeten Seite, sodaß auch die Halteteile 6 auf Druck beansprucht würden. Die über die Höhe der Formaufspannplatte 2 bzw. des Flansches 3 verteilten Halteteile 5, 6 weisen unterschiedliche Festigkeit (höhere Elastizität) auf, wobei die unteren Halteteile 5, 6 geringere Festigkeit als die oberen Halteteile 5, 6 aufweisen.

Werden die Schenkel 7, 9 des Maschinenrahmens 1 oben auseinandergedrückt, so können die ortsfeste Formaufspannplatte 2 und/oder der Schließmechanismus 4 eine Kippbewegung relativ zum Maschinenrahmen 1 durchführen, wodurch die Plattenparallelität der Formaufspannplatten 2, 8 erhalten bleibt.

Die unterschiedliche Festigkeit bzw. Elastizität der Halteteile 5, 6 kann durch unterschiedliche Formgebung erreicht werden. So können die Halteteile 5, 6 unterschiedliche Dimensionen aufweisen oder mit Materialschwächungen, beispielsweise Schlitzen versehen sein.

Ebenso kann die unterschiedliche Elastizität und Festigkeit durch den Einsatz unterschiedlicher Materialien erzielt werden. Vorteilhaft sind die Halteteile aus Stahl, insbesondere aus Federstahl gefertigt.

Im Ausführungsbeispiel nach der Fig. 3 ist nur ein Halteteil 5 vorgesehen, der die ortsfeste Formaufspannplatte 2 trägt. Dieser Halteteil 5 ist an der unteren Seite mit tieferen Schlitzen 10 und an der Oberseite mit weniger tiefen Schlitzen 11 versehen. Die Schlitze 10, 11 überschneiden sich, so daß der Halteteil 5 harmonikaartig zusammendrückbar ist. Auf diese Art und Weise wird der Halteteil 5 an der Unterseite mehr zusammengedrückt als an der Oberseite und die ortsfeste Formaufspannplatte 2 kann, wenn sich der Maschinenrahmen 1 unter dem Aufbringen der Schließkraft verformt und der Rahmenschenkel 9 nach außen kippt, eine Kippbewegung relativ zum Rahmenschenkel 9 bzw. zum Maschinenrahmen 1 durchführen.

Der Halteteil 5 könnte auch leporelloartig ausgeführt sein.

Im Ausführungsbeispiel nach der Fig. 2 ist die ortsfeste Formaufspannplatte 2 mittels zweier Halteteile 5 am Maschinenrahmen 1 gelagert, wobei beide Halteteile 5 mit Schlitzen 10, 11 versehen sind, jedoch der untere Halteteil 5 mehr Schlitze 10, 11 oder tiefere Schlitze 10, 11 als der obere Halteteil 5 aufweist und daher geringere Festigkeit.

Die Schlitze 10, 11 in den Halteteilen 5, 6 verlaufen vorteilhaft im rechten Winkel zur Maschinenlängsachse.

Die im Ausführungsbeispiel nach der Fig. 2 gezeigte Halterung für die ortsfeste Formaufspannplatte 2 ließe sich auch als Halterung für den Schließmechanismus 4 einsetzen.

Die gesonderten Halteteile 5, 6 zwischen dem Maschinenrahmen 1 und der ortsfesten Formaufspannplatte 2 bzw. dem Schließmechanismus 4 bilden jeweils ein achsloses Gelenk, das neben der Rotationsbewegung auch eine translatorische Bewegung zuläßt.

## Patentansprüche

1. Spritzgießmaschine mit einem im wesentlichen C-förmigen Maschinenrahmen, an dessen einem Schenkel eine ortsfeste Formaufspannplatte und an dessen anderem Schenke ein Schließmechanismus zum Antrieb einer bewegbaren Formaufspannplatte gelagert sind, wobei sich die nicht durch Holme verbundenen freien Enden der Schenke des Maschinenrahmens unter dem Einfluß der während des Schließvorganges auftretenden Schließkraft verformen, dadurch gekennzeichnet, daß zwischen der ortsfesten Formaufspannplatte (2) und/oder dem Schließmechanismus einerseits und dem Maschinenrahmen (1) andererseits mindestens ein Halteteil angeordnet ist, der beim Aufbringen der Schließkraft deformiert wird, wodurch die ortsfeste Formaufspannplatte (2) bzw. der Schließmechanismus ohne Verwendung von Achszapfen relativ zum Maschinenrahmen (1) gekippt wird.

2. Spritzgießmaschine nach Anspruch 1, dadurch gekennzeichnet, daß der Halteteil (6) bzw. die Halteteile (5, 6) aus Stahl gefertigt ist bzw. sind.

3. Spritzgießmaschine nach Anspruch 1 oder 2, dadurch gekennzeichnet, daß zumindest ein Halteteil als vom Maschinenrahmen gesondertes Baute ausgeführt ist.

4. Spritzgießmaschine nach einem der Ansprüche 1 bis 3, dadurch gekennzeichnet, daß die Halteteile (5, 6) und der Maschinenrahmen (1) aus unterschiedlichem Material gefertigt sind.

5. Spritzgießmaschine nach einem der Ansprüche 1 bis 4, dadurch gekennzeichnet, daß die Elastizität der Halteteile (5, 6) großer als die des Maschinenrahmens ist.

6. Spritzgießmaschine nach einem der Ansprüche 1 bis 5, dadurch gekennzeichnet, daß über die Höhe der ortsfesten Formaufspannplatte (2) und/oder einem Flansch (3) des Schließmechanismus verteilt zwei oder mehr Halteteile (5, 6) mit unterschiedlicher Festigkeit vorgesehen sind, mittels denen die ortsfeste Formaufspannplatte (2) bzw. der Schließmechanismus (4) am Maschinenrahmen (1) gelagert ist.

7. Spritzgießmaschine nach einem der Ansprüche 1 bis 6, dadurch gekennzeichnet, daß der oder die Halteteile (5, 6) aus Federstahl gefertigt ist bzw. sind.

8. Spritzgießmaschine nach einem der Ansprüche 1 bis 7, dadurch gekennzeichnet, daß die Halteteile (5, 6) unterschiedlich dimensioniert sind.

9. Spritzgießmaschine nach einem der Ansprüche 1 bis 8, dadurch gekennzeichnet, daß die Halteteile (5, 6) mit unterschiedlichen Materialschwächungen, beispielsweise Schlitzen versehen sind.

10. Spritzgießmaschine nach einem der Ansprüche 1 bis 9, dadurch gekennzeichnet, daß der Halteteil (5) von einem Zylinder oder Block gebildet wird, der an der Unterseite mit Schlitzen (10) versehen ist.

11. Spritzgießmaschine nach Anspruch 10, dadurch gekennzeichnet, daß der Halteteil (5) auch an der Oberseite mit Schlitzen (11) versehen ist, wobei die Tiefe dieser Schlitze (11) geringer als die Tiefe der Schlitze (10) an der Unterseite ist.

12. Spritzgießmaschine nach einem der Ansprüche 1 bis 11, dadurch gekennzeichnet, daß die Halteteile (5, 6) aus unterschiedlichem Material gefertigt sind.

13. Spritzgießmaschine nach einem der Ansprüche 1 bis 11, dadurch gekennzeichnet, daß die Halteteile (5, 6) aus Stahl mit unterschiedlicher Elastizität gefertigt sind.

14. Spritzgießmaschine mit einem im wesentlichen C-förmigen Maschinenrahmen, an dessen einem Schenkel eine ortsfeste Formaufspannplatte und an dessen anderem Schenkel ein Schließmechanismus zum Antrieb einer bewegbaren Formaufspannplatte gelagert sind, wobei sich die nicht durch Holme verbundenen freien Enden der Schenke des Maschinenrahmens unter dem Einfluß der während des Schließvorganges auftretenden Schließkraft verformen, dadurch gekennzeichnet, daß zwischen der ortsfesten Formaufspannplatte (2) und/oder dem Schließmechanismus einerseits und dem Maschinenrahmen (1) andererseits ein als Gelenk wirkender verbiegbarer Bereich angeordnet ist, der beim Aufbringen der Schließkraft verbogen wird, wodurch die ortsfeste Formaufspannplatte (2) bzw. der Schließmechanismus ohne Verwendung von Achszapfen relativ zum Maschinenrahmen (1) gekippt wird (Fig. 3).

## Claims

1. An injection molding machine comprising a substantially C-shaped machine frame, on one limb of which is mounted a stationary mold mounting plate and on the other limb of which is mounted a closing mechanism for driving a movable mold mounting plate, wherein the free ends of the limbs of the machine frame, which are not connected by beam members, deform under the influence of the closing force which occurs during the closing operation, characterised in that arranged between the stationary mold mounting plate (2) and/or the closing mechanism on the one hand and the machine frame (1) on the other hand is at least one holding portion which is deformed when the closing force is applied whereby the stationary mold mounting plate (2) or the closing mechanism is tilted relative to the machine frame (1).

2. An injection molding machine as set forth in claim 1 characterised in that the holding portion (6) or the holding portions (5, 6) is or are made of steel.

3. An injection molding machine as set forth in claim 1 or claim 2 characterised in that at least one holding portion is in the form of a component which is separate from the machine frame.

4. An injection molding machine as set forth in one of claims 1 through 3 characterised in that the holding portions (5, 6) and the machine frame (1) are made from different material.

5. An injection molding machine as set forth in one of claims 1 through 4 characterised in that the elasticity of the holding portions (5, 6) is greater than that of the machine frame.

6. An injection molding machine as set forth in one of claims 1 through 5 characterised in that there are provided two or more holding portions (5, 6) of different strengths, which are distributed over the height of the stationary mold mounting plate (2) and/or a flange (3) of the closing mechanism, and by means of which the stationary mold mounting plate (2) or the closing mechanism (4) is mounted to the machine frame (1).

7. An injection molding machine as set forth in one of claims 1 through 6 characterised in that the holding portion or portions (5, 6) is or are made of spring steel.

8. An injection molding machine as set forth in one of claims 1 through 7 characterised in that the holding portions (5, 6) are of different dimensions.

9. An injection molding machine as set forth in one of claims 1 through 8 characterised in that the holding portions (5, 6) are provided with different material weakenings, for example slots.

10. An injection molding machine as set forth in one of claims 1 through 9 characterised in that the holding portion (5) is formed by a cylinder or block which is provided at the underside with slots (10).

11. An injection molding machine as set forth in claim 10 characterised in that the holding portion (5) is also provided with slots (11) at the top side, wherein the depth of said slots (11) is less than the depth of the slots (10) at the underside.

12. An injection molding machine as set forth in one of claims 1 through 11 characterised in that the holding portions (5, 6) are made from different material.

13. An injection molding machine as set forth in one of claims 1 through 11 characterised in that the holding portions (5, 6) are made from steel of different elasticity.

14. An injection molding machine comprising a substantially C-shaped machine frame, on one limb of which is mounted a stationary mold mounting plate and on the other limb of which is mounted a closing mechanism for driving a movable mold mounting plate, wherein the free ends of the limbs of the machine frame, which are not connected by beam members, deform under the influence of the closing force which occurs during the closing operation, characterised in that arranged between the stationary mold mounting plate (2) and/or the closing mechanism on the one hand and the machine frame (1) on the other hand is a bendable region which acts as a hinge and which is bent when the closing force is applied whereby the stationary mold mounting plate (2) or the closing mechanism is tilted relative to the machine frame (1) without the use of shaft trunnions (Figure 3).

## Revendications

1. Presse d'injection, à bâti de presse sensiblement en forme de C sur une première des branches duquel est monté un plateau porte-outillage fixe et sur l'autre branche duquel est monté un mécanisme de fermeture destiné à entraîner un plateau porte-outillage mobile, les extrémités libres, non reliées par des longerons, des branches du bâti de presse se déformant sous l'influence de la force de fermeture exercée pendant le processus de fermeture, caractérisée en ce qu'au moins une pièce de maintien (2), qui est déformée lors de l'application de la force de fermeture est agencée entre le plateau porte-outillage fixe (2) et/ou le mécanisme de fermeture d'une part et le bâti (1) de presse d'autre part, d'une manière telle que le plateau porte-outillage fixe (2) ou le mécanisme de fermeture soit basculé par rapport au bâti (1) de presse sans utiliser de tourillon.

2. Presse d'injection selon la revendication 1, caractérisée en ce que la pièce de maintien ou les pièces de maintien (5, 6) est ou sont en acier.

3. Presse d'injection selon la revendication 1 ou 2, caractérisée en ce qu'au moins une pièce de maintien est réalisée sous forme de composant séparé du bâti de presse.

4. Presse d'injection selon l'une des revendications 1 à 3, caractérisée en ce que les pièces de maintien (5, 6) et le bâti (1) de presse sont en matières différentes.

5. Presse d'injection selon l'une des revendications 1 à 4, caractérisée en ce que l'élasticité des pièces de maintien (5, 6) est supérieure à celle du bâti de presse.

6. Presse d'injection selon l'une des revendications 1 à 5, caractérisée en ce que deux pièces de maintien (5, 6) ou davantage à résistances mécaniques différentes, au moyen desquelles le plateau porte-outillage fixe (2) ou le mécanisme de fermeture (4) est logé sur le bâti (1) de la presse, sont prévues, réparties sur la hauteur du plateau porte-outillage fixe (2) et ou d'une bride (3) du mécanisme de fermeture.

7. Presse d'injection selon l'une des revendications 1 à 6, caractérisée en ce que la pièce de maintien ou les pièces de maintien (5, 6) est ou sont en acier à ressorts.

8. Presse d'injection selon l'une des revendications 1 à 7, caractérisée en ce que les pièces de maintien (5, 6) sont de dimensions différentes.

9. Presse d'injection selon l'une des revendications 1 à 8 , caractérisée en ce que les pièces de maintien (5, 6) comportent des moyens différents d'affaiblissement de la matière, par exemple des fentes.

10. Presse d'injection selon l'une des revendications 1 à 9, caractérisée en ce que la pièce de maintien (5) est constituée d'un cylindre ou d'un bloc qui comporte des fentes (10) sur son côté inférieur.

11. Presse d'injection selon la revendication 10, caractérisée en ce que la pièce de maintien (5) comporte aussi des fentes (11) sur son côté supérieur, la profondeur de ces fentes (11) étant inférieure à la profondeur des fentes (10) du côté inférieur.

12. Presse d'injection selon l'une des revendications 1 à 11, caractérisée en ce que les pièces de maintien (5, 6) sont en matières différentes.

13. Presse d'injection selon l'une des revendications 1 à 11, caractérisée en ce que les pièces de maintien (5, 6) sont en aciers à élasticités différentes.

14. Presse d'injection à bâti de presse sensiblement en forme de C, sur une première des branches duquel est monté un plateau porte-outillage fixe et sur l'autre branche duquel est monté un mécanisme de fermeture destiné à entraîner un plateau porte-outillage mobile, les extrémités libres, non reliées par des longerons, des branches du bâti de presse se déformant sous l'influence de la force de fermeture exercée pendant le processus de fermeture, caractérisée en ce qu'une zone flexible, agissant comme une articulation, qui est fléchie lors de l'application de la force de fermeture est agencée entre le plateau porte-outillage fixe (2) et/ou le mécanisme de fermeture d'une part et le bâti (1) de presse d'autre part, d'une manière telle que le plateau porte-outillage fixe (2) ou le mécanisme de fermeture soit basculé par rapport au bâti (1) de presse sans utiliser de tourillon (Fig. 3).
